# EUROPEAN PATENT SPECIFICATION

(11) **EP 0 531 092 B1**
(45) Date of publication and mention of the grant of the patent: **22.01.1997**
(21) Application number: 92307925.5
(22) Date of filing: 01.09.1992
(51) Int. Cl.: F23N 5/20, F24H 3/04

(54) **Hot-air blower**
Warmluftgebläse
Souffleur d'air chaud

(30) Priority: 13.09.1991 JP 263269/91; 02.09.1991 JP 248270/91; 19.09.1991 JP 268761/91
(43) Date of publication of application: 10.03.1993
(73) Proprietor: SHIZUOKA SEIKI CO. LTD., Fukuroi-shi Shizuoka-ken (JP)
(72) Inventor: Suzuki, Ryouji, Fukurio-shi, Shizuoka-ken (JP); Suzuki, Mitsuo, Fukuroi-shi, Shizuoka-ken (JP); Mizuno, Akira, Ogasagun, Shizuoka-ken (JP)
(74) Representative: BATCHELLOR, KIRK & CO.

(56) References cited:
- US-A- 3 589 848
- PATENT ABSTRACTS OF JAPAN vol. 15, no. 124 (M-1097)26 March 1991 & JP-A-30 11 225
- PATENT ABSTRACTS OF JAPAN vol. 9, no. 286 (M-429)13 November 1985 & JP-A-60 126 528

## Description

The present invention relates to a blower for blowing hot-air to heat or dry things, and more particularly to a system for stabilizing the burning of fuel in a combustion chamber.

Japanese Utility Model Laid Open Specification 51-3942 discloses an infrared heater with a liquid fuel combustion device as a hot-air blower. The heater has a conical combustion chamber having a fuel injection hole at a rear portion thereof, and a hot grid at a front portion.

In such a heater, fuel pressure at a nozzle is previously determined in accordance with the size and shape of the combustion chamber and the specification of the nozzle. Air is supplied in a quantity dependent on the fuel pressure so as to completely burn the fuel. In the combustion system, the static pressure in the combustion chamber rapidly increases upon the firing of the fuel, which causes a shortage of air. As a result, the firing of fuel becomes unstable, causing generation of smoke.

An object of the present invention is to provide a hot-air blower which may stably ignite the liquid fuel.

The reader may be further enlightened as to the state of the art by reference to JP-A-301125. This document shows a houshold heater involving pre-purging and subsequent ignition of the fuel at an air supply which is higher then the steady air supply driving normal firing.

According to the present invention there is provided a hot air blower in accordance with claim 1.

In an aspect of the invention, the hot-air blower further comprises a circulator fan for inducting ambient air into the housing for cooling the interior of the housing, a duct for leading circulated air discharged from the circulator fan to a front portion of the housing, and a louver for discharging the circulated air to a front of the combustion chamber so as to prevent the hot-air discharged from the furnace from rising.

A hot-air blower, embodying the present invention will now be described, by way of example only, with reference to the accompanying drawings, in which:
Fig. 1 is a sectional side view of a hot-air blower;
Fig. 2 is a front view of the blower;
Fig. 3 is a schematic side view showing a hot-air supply device;
Fig. 4 is a block diagram showing a combustion system;
Fig. 5 is a side view showing a pivoting device;
Fig. 6 is a plan view showing the pivoting device;

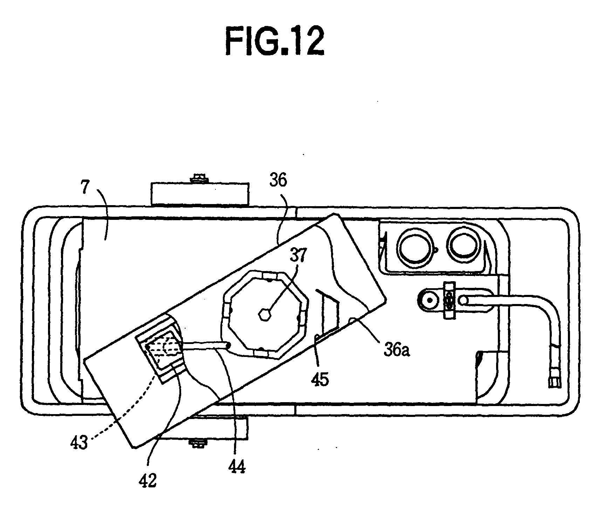

Figs. 7 to 12 show the operation of the pivoting device; and
Fig. 13 is a time chart showing the operation of the hot-air blower.

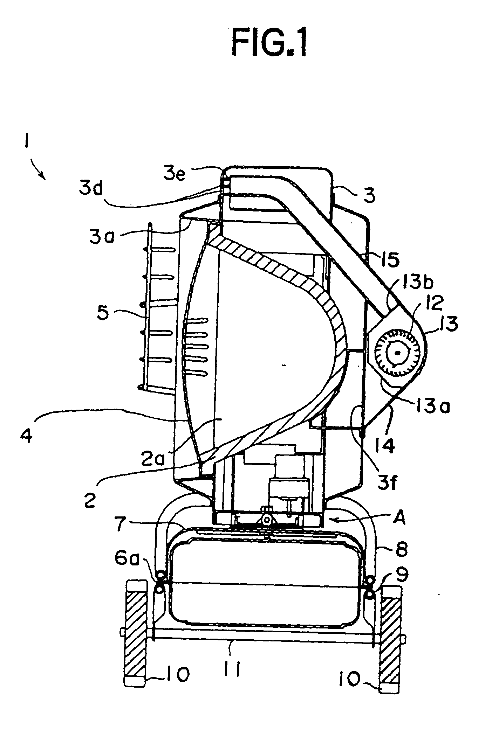

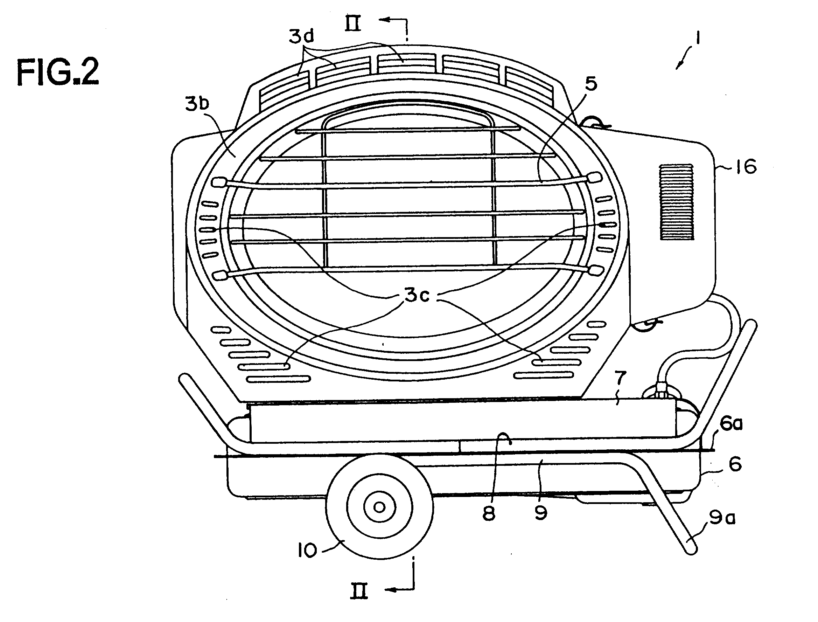

Referring to Figs. 1 and 2, a hot-air blower 1 of the present invention comprises a housing 3 mounted on a base plate 7 and a furnace 2 provided in the housing 3. The furnace 2 has an elliptic front shape as shown in Fig. 2 and an inner pseudo-conical surface converging rearwardly to join a parabolic back part. A radiating plate 4 having a plurality of apertures is secured to the front edge of the furnace and a guard grid 5 is attached to the housing for preventing access to the radiating plate 4.

The housing 3 has a plurality of induction holes 3c at the front and bottom portions thereof and is mounted on the base plate 7 through an oscillating pivoting device A. The base plate 7 is secured to a flange 6a of a fuel tank 6, the flange being fixed to pipe frames 8 and 9.

A pair of wheels 10 are pivotally mounted on shafts 11 for supporting the housing together with a leg 9a of the frame 9.

A circulation fan 12 provided in a case 13 is mounted on a rear portion of the housing 13. An induction port 13a is formed in a lower plate of the case 13, and a discharge port 13b is formed in an upper plate of the case. An induction cover 14 is provided to cover the induction port 13a and an intake port 3f formed in the housing 3 at a rear portion thereof.

An air duct 15 is provided to be communicated with the discharge port 13b. The duct 15 is disposed in the housing 3, upwardly inclined therein along the periphery of the furnace 2. An upper end portion of the duct 15 is horizontally expanded and opened at a louver 3d formed in the front plate of the housing 3. The blades of the louver 3d are downwardly inclined so as to guide the air to the front of the furnace.

There is provided a hot-air supply device in a cover 16 at a side of the furnace 2.

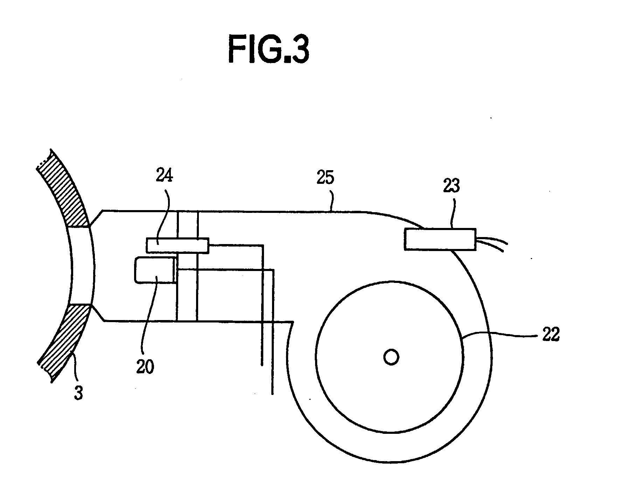

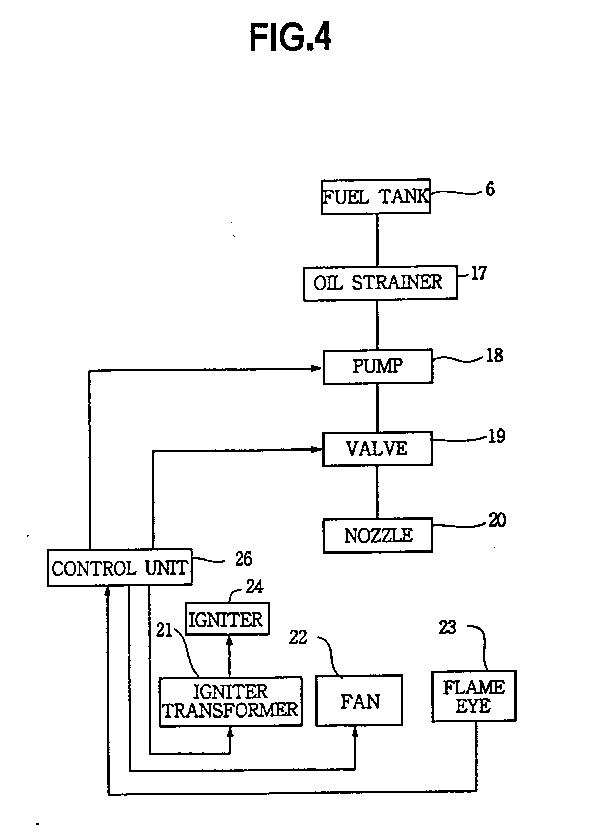

Referring to Fig. 3, the hot-air supply device comprises a nozzle 20, an igniter 24, a combustion fan 22 and a flame eye 23 which are provided in a casing 25. As shown in Fig. 4, the igniter 24 is electrically connected to a control unit 26 through an igniter transformer 21, and the combustion fan 22 and the flame eye 23 are connected to the control unit 26. The fuel tank 6 is communicated with the nozzle 20 through an oil strainer 17, electromagnetic pump 18, and electromagnetic valve 19.

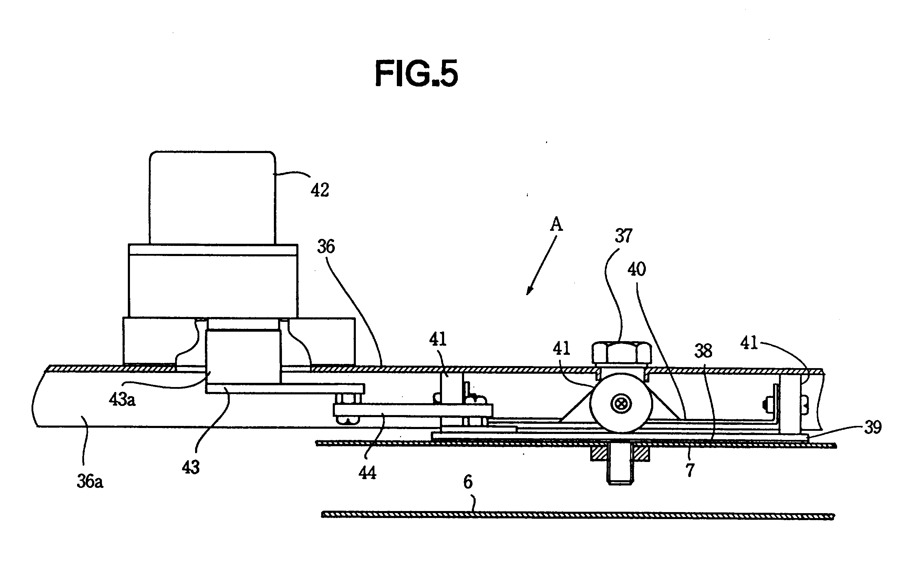

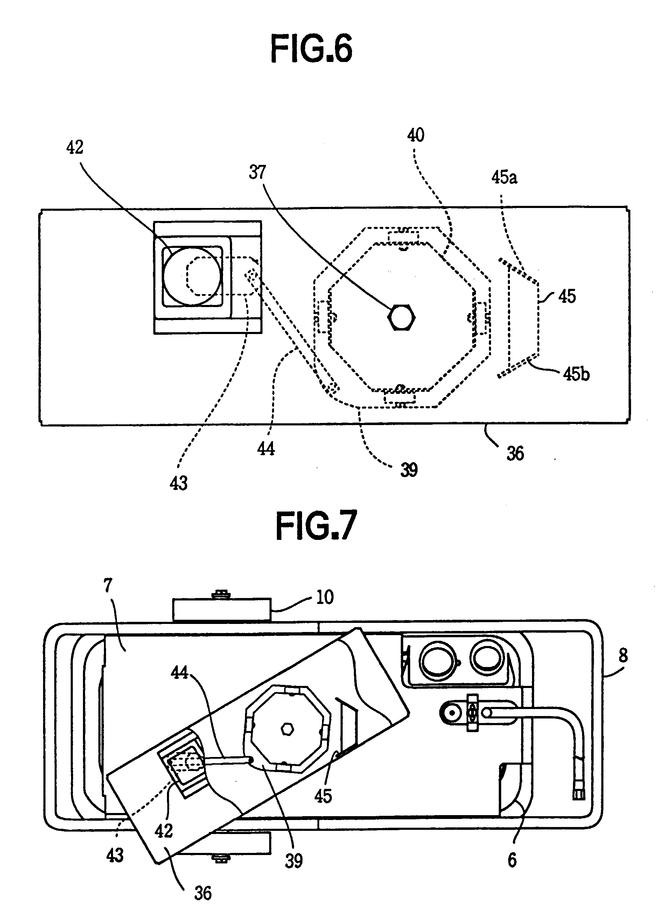

Referring to Figs. 5 and 6, the oscillating pivoting device A has a pivoting plate 36 on which housing 3 is mounted. The pivoting plate 36 is pivotally mounted on a fixed shaft 37 secured to the base plate 7. On the base plate 7, a sheet 38, and a spacer 39 are mounted in order. A roller retainer 40 is mounted on the spacer 39, and four rollers 41 are provided on the roller retainer 40. The rollers 41 are mounted on the spacer 39 for supporting the pivoting plate 36.

On the pivoting plate 36, a driving motor 42 is provided. A crank arm 43 is secured to a boss 43a secured to a rotating shaft of the motor 42. The crank arm 43 is connected to the spacer 39 through a connecting lever 44. A stopper 45 is secured on the base plate 7. The stopper 45 has a pair of stopper plates 45a and 43b. The stopper plates are arranged to abut on inside vertical walls 36a formed on opposite sides of the pivoting plate 36 when the pivoting plate pivots about the shaft 37 at about 30 degrees in either pivoting direction.

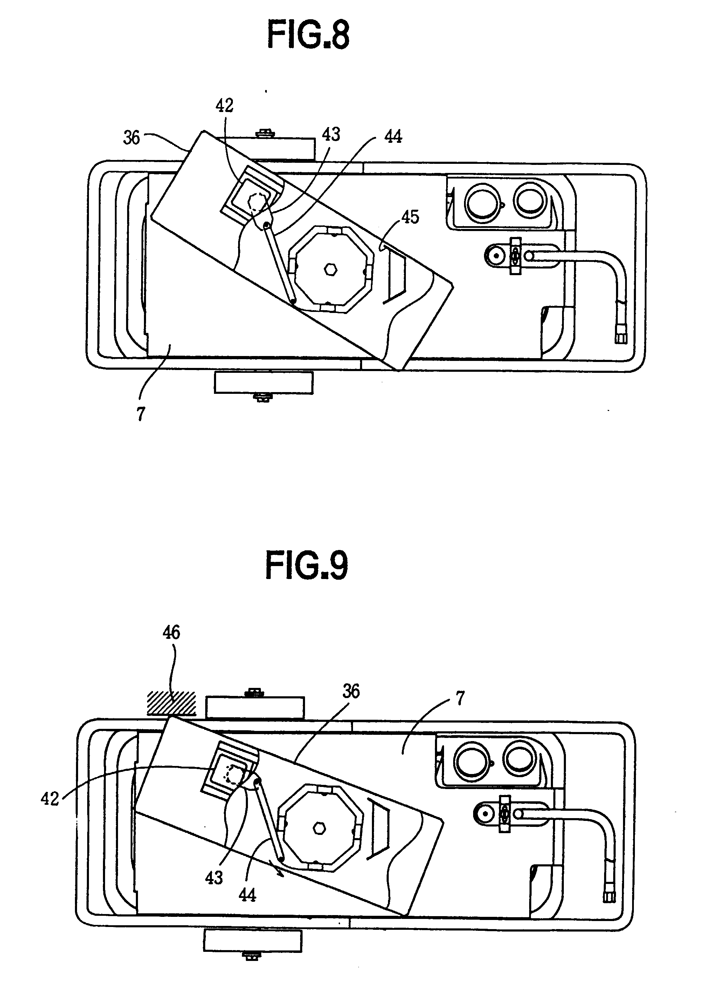

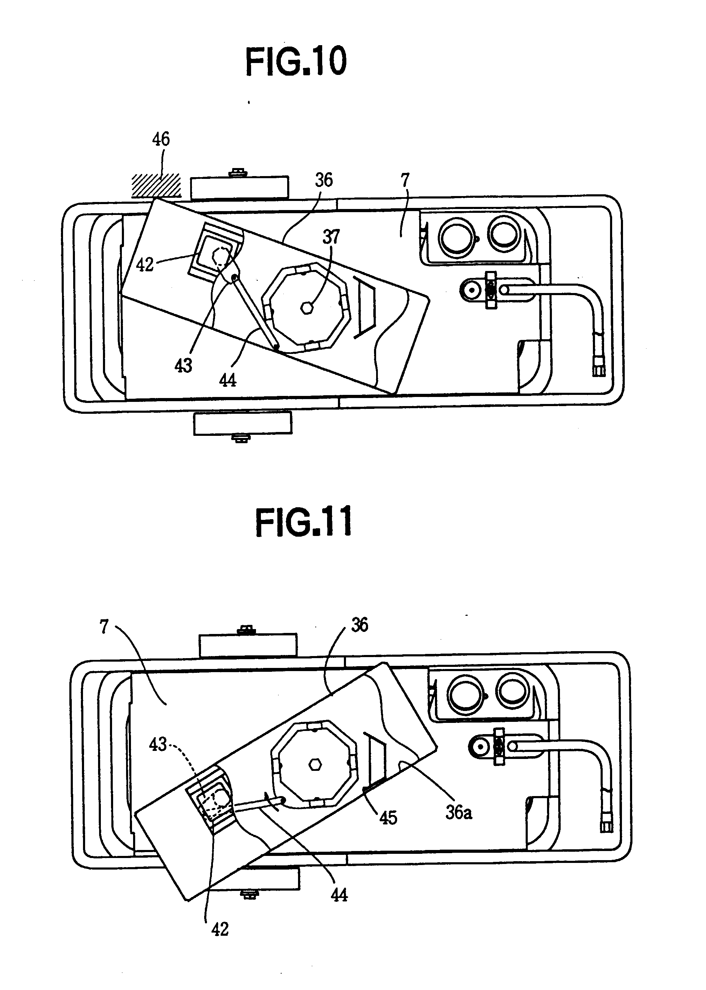

When the motor 42 operates to rotate the crank arm 43 in the clockwise direction in Fig. 6, the pivoting plate 36 pivots in the clockwise direction about the shaft 37. At that time, the spacer 39 does not pivot because of the load thereon. If the pivoting plate 36 abuts on an obstruction 46 as shown in Fig. 9, the spacer 39 is rotated until the top dead center of the crank arm 43 as shown in Fig. 10. Thus, excessive load on the motor 42 can be prevented.

Referring to Figs. 7 and 8, the vertical wall 36a of the pivoting plate 36 the abuts on either of the stopper plates 45a and 45b before the bottom dead center or the top dead center. When the crank arm passes the bottom dead center or the top dead center at a small angle, the pivoting direction of the plate 36 changes. Since the spacer 39 is pivoted during the engagement of the vertical wall 36a with the stopper, the changing of the pivoting direction can be smoothly performed. Thus, the blower body is oscillated about 60 degrees.

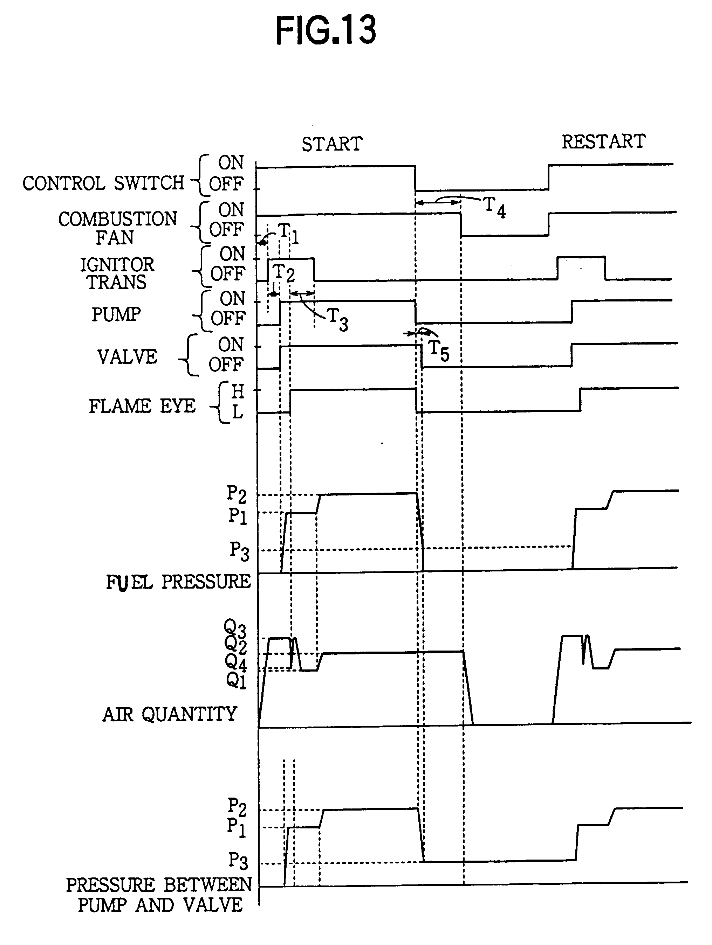

Referring to Fig. 13, the combustion fan 22 starts at the same time as the operation of a control switch. The quantity of air supplied by the combustion fan 22 is determined dependent on the fuel pressure. There are two levels of the fuel pressure. Namely, one of the levels is a standard fuel pressure P₁ originally set in the blower, and the other is an optional pressure P₂ set by a user. However, until the ignition completes, the static pressure in a combustion chamber 2a (Fig. 1) increases, causing the quantity of supplied air to decrease. Therefore, the quantity of supplied air is set to an increased ignition quantity Q₃ so as to compensate for the decrease of air quantity. The quantity Q₃ is larger than a standard quantity Q₁ corresponding to the standard pressure P₁ and a selected quantity Q₂ corresponding to the optional pressure P₂.

A discharge time T₁ is provided after the start of the combustion fan 22 for discharging remaining gases in the combustion chamber 2a. After the time T₁, the igniter transformer 21 is operated to energize the igniter 24. After a pre-ignition time T₂, the electromagnetic pump 18 and the electromagnetic valve 19 are operated to supply the fuel to the nozzle 20 at the standard fuel pressure P₁. Thus, the fuel is exactly ignited with the increased quantity Q₃ of supplied air. The igniter transformer 21 is de-energized after a time T₃ after the ignition.

When the fuel is ignited, the static pressure in the combustion chamber 2a increases because of the expansion of the combustion gas. Consequently, the quantity of supplied air temporarily reduces to Q₄. However, the quantity Q₄ is slightly larger than the standard quantity Q₁ for the complete combustion. Therefore, the fuel can be exactly ignited, thereby preventing the generation of smoke. When the ignition is completed, the flame eye 23 detects it to produce an output signal. The output signal is applied to the control unit 26, so that the quantity of air is reduced to the standard quantity Q₁ corresponding to the standard fuel pressure P₁.

When the combustion becomes stable with the quantity Q₁ at the fuel pressure P₁, the quantity and the pressure are changed to the selected quantity Q₂ and optional pressure P₂ set by the user. Thus, the combustion is continued under the conditions by the user. Thus, combustion gas in the combustion chamber 2a is discharged passing through the apertures of the radiating plate 4 by the combustion fan 22.

When the control switch is turned off, the electromagnetic pump 18 stops to extinguish the fire. The electromagnetic valve 19 is closed after a time T₅ so that the pressure between the pump 18 and the valve 19 drops to a pressure P₃ which is lower than the standard pressure P₁. After a cooling time T₄, the combustion fan 22 stops. During the time T₄ the furnace 2 is cooled by the cooling air from the fan.

If the pressure between the pump and the valve is maintained at the optional pressure P₂ during the stop of the blower, the quantity of fuel supplied at the restarting of the blower is increased by the high pressure, which causes the production of smoke. In addition, the life of the pump and the valve is shortened by the high fuel pressure. However, in the system, the pressure between the pump and the valve is reduced to the pressure P₃. Consequently, such disadvantages are removed.

On the other hand, the circulator fan 12 is operated after a predetermined time from the ignition of the fuel.

Accordingly, ambient air is inducted into the housing 3 passing through induction holes 3c, so that the interior of the housing is cooled. The air is further inducted in the case 13 passing through the induction port 13a and discharged from the louver 3d passing through the duct 15. The air is fed to the front of the furnace 2, so that hot air discharged from the radiating plate 4 is prevented from rising. Thus, the objects are effectively heated by the discharged hot air.

From the foregoing it will be understood that the present invention provides a hot air blower in which fuel is surely ignited without producing smoke.

## Claims

1. A hot-air blower having a housing (3) and control means to control the supply of liquid fuel and air to a combustion chamber (2a) in the housing, said control means in normal steady operation providing a normal steady quantity (Q1) of supplied air and a corresponding fuel pressure (P1), characterised in that the control means (26) is adapted to control the air supply in a start-up stage to provide an increasing quantity of air up to an ignition air quantity (Q3) greater than said normal steady state quantity (Q1) of air, said ignition air quantity (Q3) to be maintained during ignition of the fuel at said fuel pressure (P1) to compensate for an increased static pressure in the combustion chamber (2a) during ignition, and in that a flame eye (23) is provided to sense ignition completion, the control means (26) being provided to respond to said sensed ignition completion to set the air supply to said normal steady state quantity (Q1).

2. A hot-air blower according to claim 1 having a nozzle (20) for injecting the fuel, an igniter (24) for igniting the fuel, a fuel pump (18) for supplying fuel to the nozzle (20), and said control means includes a combustion fan (22) connected to a control unit (26) for supplying air to the combustion chamber (2a).

3. A hot-air blower according to claim 1 or claim 2 comprising a circulator fan (12) for inducting ambient air into the housing for cooling the interior of the housing.

4. A hot-air blower according to claim 3 comprising a pivoting device (A) for pivotally oscillating the housing (3), said pivoting device (A) including a driving motor (42), a pivoting plate (36) mounted on a fixed shaft (37), and four rollers for supporting the pivoting plate (36).

5. A hot-air blower according to claim 3 comprising a duct (15) for leading circulated air discharged from the circulator fan (12) to a front portion of the housing (3).

6. A hot air blower according to claim 5 having a louvre (3d) for discharging the circulated air in front of the combustion chamber (2a) so as to prevent the hot-air discharged from the combustion chamber (2a) from rising.

## Patentansprüche

1. Heißluftgebläse mit einem Gehäuse (3) und Steuermitteln zum Steuern der Zuführung von Flüssigbrennstoff und Luft zu einer Verbrennungskammer (2a) in dem Gehäuse, wobei das Steuermittel bei der normalen stabilen Arbeitsweise eine normale stabile Menge (Q₁) der zugeführten Luft und einen entsprechenden Brennstoffdruck (P₁) zur Verfügung stellt, gekennzeichnet dadurch, daß das Steuermittel (26) zum Steuern der Luftzuführung in einem Schritt der Inbetriebnahme angepaßt ist, um eine steigende Luftmenge bis zu einer Entzündungsluftmenge (Q₃) vorzusehen, die größer ist als die stabile Normalzustandsmenge (Q₁) der Luft, wobei die Entzündungsluftmenge (Q₃) während der Entzündung des Brennstoffes mit dem Brennstoffdruck (P₁) aufrechtzuerhalten ist, um einen erhöhten statischen Druck in der Verbrennungskammer (2a) während der Entzündung auszugleichen, und daß eine Flammenüberwachung (23) vorgesehen ist, um die Entzündungsbeendigung festzustellen, wobei das Steuermittel (26) vorgesehen ist, um auf die festgestellte Zündungsbeendigung zu reagieren und die Luftzuführung auf die stabile Normalzustandsmenge (Q₁) einzustellen.

2. Heißluftgebläse nach Anspruch 1, das eine Düse (20) zum Einspritzen des Brennstoffes, einen Zünder (24) zum Entzünden des Brennstoffes, eine Brennstoffpumpe (18) zum Zuführen des Brennstoffes zu der Düse (20) besitzt und bei dem das Steuermittel ein Verbrennungsgebläse (22) umfaßt, das zum Zuführen von Luft zu der Verbrennungskammer (2a) mit einer Steuereinheit (26) verbunden ist.

3. Heißluftgebläse nach Anspruch 1 oder 2, das einen Umwälzlüfter (12) zum Ansaugen von Umgebungsluft in das Gehäuse zum Kühlen des Gehäuseinnenraumes umfaßt.

4. Heißluftgebläse nach Anspruch 3, das eine Dreheinrichtung (A) zum pendelnden Drehen des Gehäuses (3) umfaßt, wobei die Dreheinrichtung (A) einen Antriebsmotor (42), eine an einer feststehenden Welle (37) befestigte, drehbare Platte (36) und vier Rollen zum Tragen der drehbaren Platte (36) umfaßt.

5. Heißluftgebläse nach Anspruch 3, das eine Leitung (15) zum Führen der aus dem Umwälzlüfter (12) ausgetragenen, umgewälzten Luft zu einem Vorderteil des Gehäuses (3) umfaßt.

6. Heißluftgebläse nach Anspruch 5, das einen Entlüftungsschlitz (3d) zum Austragen der umgewälzten Luft vor der Verbrennungskammer (2a) besitzt, um das Aufsteigen der aus der Verbrennungskammer (2a) ausgetragenen Heißluft zu verhindern.

## Revendications

1. Souffleur d'air chaud comportant un carter (3) et des moyens de régulation pour réguler l'amenée de combustible liquide et d'air à une chambre de combustion (2a) dans le carter, lesdits moyens de régulation en fonctionnement régulier normal délivrant une quantité régulière normale (Q1) d'air délivré et une pression de combustible correspondante (P1), caractérisé en ce que les moyens de régulation (26) permettent de réguler l'amenée d'air dans une étape de mise en marche pour délivrer une quantité accrue d'air jusqu'à une quantité d'air d'allumage (Q3) supérieure à ladite quantité d'air à l'état régulier normal (Q1), ladite quantité d'air d'allumage (Q3) à maintenir pendant l'allumage du combustible à ladite pression du combustible (P1) pour compenser une pression statique accrue dans la chambre de combustion (2a) durant l'allumage, et en ce qu'un oeil de flamme (23) est prévu pour détecter la fin de l'allumage, les moyens de régulation (26) étant prévus pour répondre à ladite fin d'allumage détectée afin de régler l'amenée d'air à ladite quantité à l'état régulier normal (Q1).

2. Souffleur d'air chaud selon la revendication 1, comportant une buse (20) destinée à injecter le combustible, un dispositif d'allumage (24) destiné à allumer le combustible, une pompe à combustible (18) destinée à amener le combustible vers la buse (20), et lesdits moyens de régulation comprennent un aérateur de combustion (22) relié à un régulateur (26) pour amener de l'air à la chambre de combustion (2a).

3. Souffleur d'air chaud selon la revendication 1 ou la revendication 2, comprenant un aérateur circulateur (12) destiné à introduire l'air ambiant dans le carter pour refroidir l'intérieur du carter.

4. Souffleur d'air chaud selon la revendication 3, comprenant un dispositif pivotant (A) destiné à faire osciller de manière pivotante le carter (3), ledit dispositif pivotant (A) comprenant un moteur d'entraînement (42), une plaque pivotante (36) montée sur un axe fixe (37), et quatre galets pour supporter la plaque pivotante (36).

5. Souffleur d'air chaud selon la revendication 3, comprenant un conduit (15) destiné à conduire l'air mis en circulation déchargé de l'aérateur circulateur (12) vers une partie avant du carter (3).

6. Souffleur d'air chaud selon la revendication 5, comportant un volet d'aération (3d) destiné à décharger l'air mis en circulation à l'avant de la chambre de combustion (2a) afin d'éviter la remontée de l'air chaud déchargé par la chambre de combustion (2a).
